# EUROPEAN PATENT SPECIFICATION

(11) **EP 3 857 977 B1**
(45) Date of publication and mention of the grant of the patent: **01.11.2023**
(21) Application number: 19756396.8
(22) Date of filing: 27.08.2019
(51) Int. Cl.: H04W 48/18

(54) **NETWORK SLICE REGISTRATION MANAGEMENT**
VERWALTUNG DER NETZWERKSCHICHTREGISTRIERUNG
GESTION DE ENREGISTREMENT DANS UNE TRANCHE DE RÉSEAU

(30) Priority: 27.09.2018 EP 18197290
(43) Date of publication of application: 04.08.2021
(73) Proprietor: British Telecommunications public limited company, London E1 8EE (GB)
(72) Inventor: CORSTON-PETRIE, Andrew, London EC4V 5BT (GB); BROWN, Ruth, London EC4V 5BT (GB); HART, Jonathan, London EC4V 5BT (GB)
(74) Representative: British Telecommunications public limited company Intellectual Property Department
(86) International application number: PCT/EP2019/072807
(87) International publication number: WO 2020/064242

(56) References cited:
- EP-A1- 3 358 887
- WO-A1-2017/173404
- WO-A1-2018/170135
- US-A1- 2009 137 227

## Description

### Field of Invention

The present invention relates to managing allocation of a User Equipment (UE) to a network slice.

### Background

Network slicing is a method of virtualising a network so as to create multiple logical networks within a single physical network. This is typically undertaken to offer differentiated service models, which might include varying performance and/or stability characteristics within a network, and it is supported by the fact that network slices are isolated from one another other during operation. As a result, high traffic or a large number of users on one slice is unable negatively to affect other network slices.

For example, network slices may be configured to provide specialised functions, including: exclusively serving emergency services (which demands, at least, reliability); enhanced Mobile Broadband (eMBB); and Massive Machine Type Communications (MMTC).

A network will adapt network slices to suit network conditions and to optimise utilisation of individual network slices. To ensure constant availability of resources as network slices' resources are consumed, scaling occurs. If a network slice reaches a threshold utilisation the creation of additional slice resources may be triggered so as to cope with high network loads; this is typically achieved by 'scaling up' or by 'scaling out' a network slice.

The allocation of new processing resources to a network slice (via scaling) can take a matter of minutes, and typically around 2 to 10 minutes. However, during such scaling, network slices are particularly susceptible to additional loads. As a result, new users may be prevented from accessing the network or network congestion may be experienced by users.

It is an aim of the present invention at least to alleviate some of the aforementioned problems.

EP3358887 discloses a user equipment registration method for network slice selection, and a network controller and a network communication system. The method includes: receiving a registration request of a UE; in response to receiving the registration request including slice selection information, determining whether having a capability for serving the UE according to the slice selection information, so as to transmit a first network function discovery request including the slice selection information or transmit a second network function discovery request for searching a target AMF; and selecting a network function for serving the UE according to a network function discovery response to perform a registration setting operation after receiving the network function discovery response corresponding to the first network function discovery request, or transmitting an interface connection release message to an access node after receiving another network function discovery response corresponding to the second network function discovery request.

WO2017173404 discloses methods and apparatuses for providing access to a network slice in a communication system. A network server that implements a Control Plane (CP) Network Function (NF) may receive a Non-Access Stratum (NAS) message from a wireless transmit and receive unit (WTRU). The NAS message comprises a Mobility Management (MM) message for registration and a Session Management (SM) messages for a specific service provided by the network slice. After selecting the network slice, the network server may transmit the SM message to another CP NF in the network slice to establish a communication link between the WTRU and the network slice.

WO2018170135 discloses an apparatus for self-optimization of a Network Slice Instance, NSI, comprising network slice related management functions comprising one or more of: a Network Slice Management Function, NSMF, operable to monitor a performance of a Network Slice Instance in use, and evaluate whether the Network Slice Instance meets a received set of Network Slice requirements, wherein the received set of Network Slice requirements are received from a Service Management Function, SMF, and/or an Operator's target for performance of the Network Slice Instance; and a Network Slice Subnet Management Function, in communication with the Network Slice Management Function, and operable to modify a Network Slice SubNet Instance, NSSI, for use in the Network Slice Instance in use in order to meet the received Network Slice requirements.

US2009137227 discloses a federated virtual network for the creation of a logical network from multiple physical communications networks that each provide one or more communications services. The communications networks register their service capabilities with a network resources register. Users may then request from their networks a particular type, capability, and/or capacity of a network service using their communication devices. If the service requests are authorized, the network resources register maps the requestor's communication device to one or more network services offered by another network. Verifying the authorization may be performed by consulting an independent entity, which thus acts as a gatekeeper for the services.

### Summary of Invention

According to a first aspect of the present invention, there is provided a method of managing allocation of a User Equipment (UE) to a network slice of a telecommunications network according to claim 1.

According to another aspect of the invention, there is provided a telecommunications network for managing allocation of a User Equipment (UE) to a network slice according to claim 14.

According to yet another aspect of the invention, there is provided a computer-readable storage medium comprising instructions that, when executed by a processor associated with a telecommunications network, causes the telecommunications network to perform the aforesaid method.

In this specification the word 'or' can be interpreted in the exclusive or inclusive sense unless stated otherwise.

Furthermore, features implemented in hardware may generally be implemented in software, and vice versa. Any reference to software and hardware features herein should be construed accordingly.

The invention extends to a method of managing allocation of a User Equipment (UE) to a network slice and a telecommunications network as described herein and/or substantially as illustrated with reference to the accompanying drawings. The present invention is now described, purely by way of example, with reference to the accompanying diagrammatic drawings, in which:
Figure 1 shows a schematic diagram of an exemplary telecommunications network;
Figure 2 shows a portion of the network; and
Figures 3, 4 and 5 outline processes for managing network slices within the network.

### Specific Description

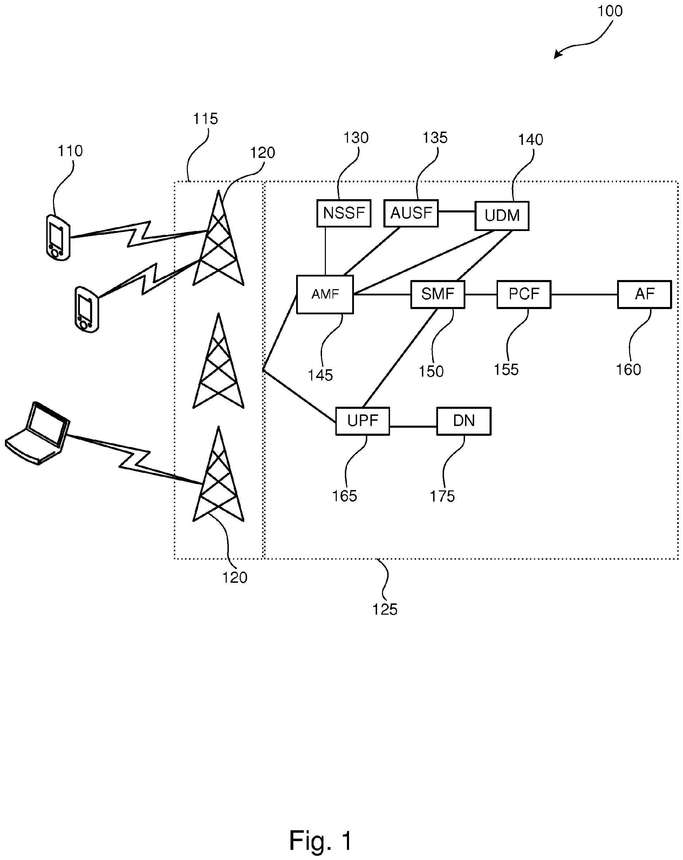

Figure 1 is a schematic diagram of an exemplary telecommunications network 100.

The network 100 is shown as a mobile cellular network comprising User Equipment (UE) 110 (*e.g.* in the form of a mobile cellular device, laptop or tablet) that is configured to utilise the telecommunications network 100 by accessing a Radio Access Network (RAN) 115, as provided by RAN access points 120 (*e.g.* in the form of a macro-, micro-, pico- or femto-cell site). In turn, the RAN access points 120 are connected to a core network 125.

The network 100 operates in accordance with, for example, 5G technology. Accordingly, in this example, the core network 125 comprises the following functional components:
- Network Slice Selection Function (NSSF) 130;
- AUthentication Server Function (AUSF) 135;
- Unified Data Management (UDM) 140;
- Access and mobility Management Function (AMF) 145;
- Session Management Function (SMF) 150;
- Policy Control function (PCF) 155;
- Application Function (AF) 160;
- User Plane Function (UPF) 165; and
- Data Network (DN) 175.

By means of the aforementioned functional components of the core network 125, the network 100 provides and manages a plurality of network slices. In particular, the NSSF 130 is configured to identify and to select a suitable network slice for the UE 110, and then to communicate that selection in order to help ensure that the UE is registered with the selected network slice.

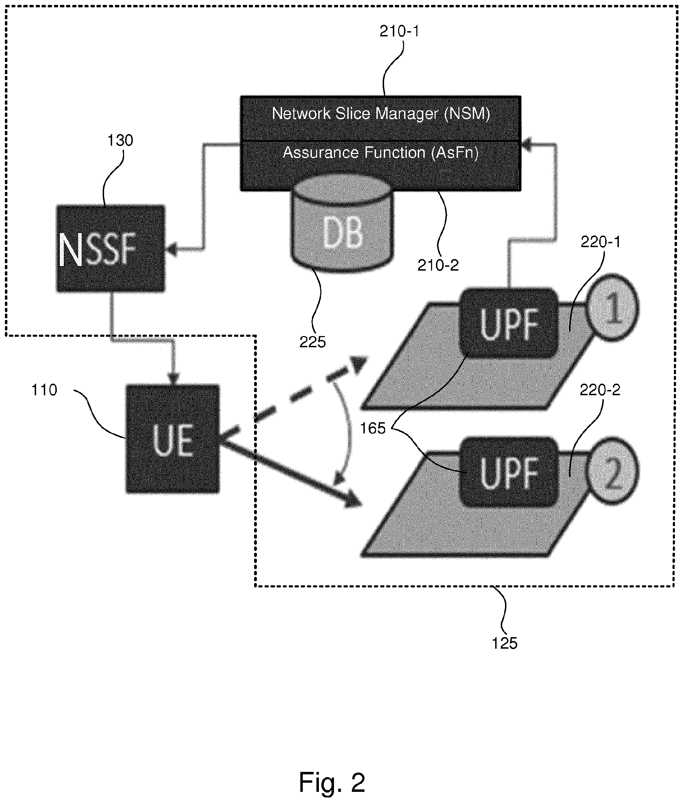

In more detail, Figure 2 illustrates the components of the core network 125 that are responsible for the allocation of UEs to network slices. To do so, the NSSF 130 is configured to identify and select a suitable network slice for the UE 110, so that the UE then registers to the selected network slice.

Within the network core 125, there is provided a Network Slice Manager (NSM) 210-1, which is in communication with the User Plane Function (UPF) 165 for network slices 220. The NSM configures the network slices 220 so as to manage the processing resources of the network slices, and therefore to fulfil the demands of services utilising the network slices.

As part of the NSM 210-1, an Assurance Function (AsFn) 210-2 is provided that ascertains the performance of network slices 220; that is, whether individual network slices are operating and are performing sufficiently. For example, the AsFn measures: processing unit consumption; number of concurrent users; and/or performance metrics (including, for example, latency, bandwidth, jitter, error rate and/or round-trip time).

In the normal course of operation of the network, the UE is assigned to, and registered with, a primary network slice 220-1. The primary network slice 220-1 is the most preferred network slice, when performing as required, for processing network communications from a given UE, and it is selected, not least, in dependence on: a prescribed selection; the type of UE; the type of network communication from the UE; time; and/or the service agreement between the mobile network operator of the core network 125 and the UE.

The NSM 210-1 receives from - and/or retrieves from a database 230 populated by - the AsFn 210-2 data regarding the operation and performance of the primary network slice 220-1. If the primary network slice 220-1 is not suitable for processing a network communication from the UE, then the UE is assigned to an alternative - partner - network slice 220-2.

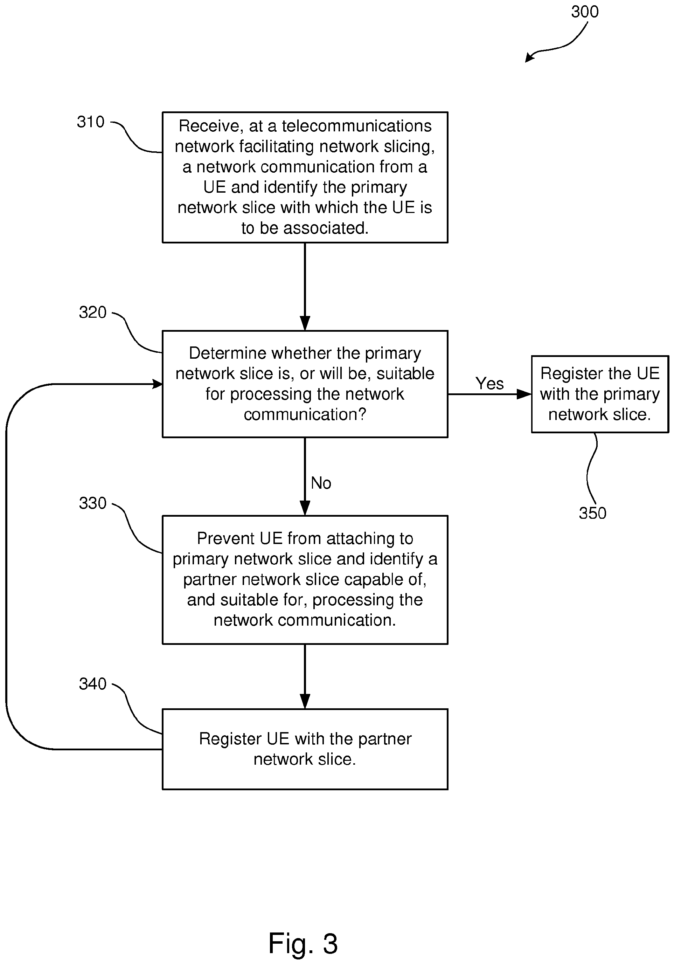

Figure 3 outlines in more detail a process 300 for allocating a UE to network slices. In a first step 310, a network communication from the UE 110 is received by the network 100. The network communication is, for example, an attach request for attaching to the network. Once the (or part of the) network communication has been received by the network, the NSSF 130 identifies a primary network slice onto which to allocate the UE.

At a given moment, the identified primary network slice 220-1 may not be suitable for processing a network communication from the UE. This may be for a variety of reasons, including: an existing processing capacity breach; an insufficiency of excess available processing resources to process the network communication; downtime in the network slice; scaling (out, up and/or down) of the primary network slice in order to increase processing resources of the network slice; creation or restarting of the primary network slice without it yet fully operating; removal of the primary network slice; and/or other reconfiguring of the primary network slice. Accordingly, a determination 320 is made whether the primary network slice is (or will be, within an acceptable period of time, for example by the time that the UE is registered) suitable for processing the network communication from the UE 110; this is determined by the AsFn.

If it is ascertained that the primary network slice 220-1 is not operating or performing sufficiently 330 (*e.g*. because it is scaling, as triggered by the NSM), this is communicated to the NSSF (*e.g*. from the AsFn, or by having the NSSF access the database 230), and the NSSF 130 prevents the UE 110 from registering with the primary network slice 220-1. In effect, the NSM thereby prevents the primary network slice 220-1 from having to process the network communication, and the partner network slice lends its processing resources to assist the primary network slice. As a result, the primary network slice is protected (for example, if it is overloaded and/or scaling) and prevents or helps reduce network congestion as experienced by the UE 100 and/or by existing UEs already registered with the primary network slice 220-1.

In this eventuality 330, the NSSF 130 identifies the partner network slice 220-2 for the UE. Once identified, and its suitability (current or expected) to handle the network communication from the UE 110 has been confirmed by the AsFn 210-2, the UE is then instructed to register with the partner network slice 220-2, and subsequently does so 340.

In the event that it is determined that the primary network slice is (or will be) suitable for processing the network communication, then the UE is permitted to register with the primary network slice 350.

After the UE has registered with the partner network slice 220-2 in step 340, the process 300 then repeats to evaluate anew whether the primary network slice is now (or now will be) suitable for processing the (ongoing) network communication. If so, then the UE registers with the primary network slice 350, otherwise the UE remains registered to the partner network slice 220-2 in step 340.

It will be appreciated that the partner network slice is available to change with each loop of the process 300, since a previously-identified partner network slice may no longer be suitable to process a subsequent network communication. Accordingly, a primary network slice may become a partner network slice, and vice versa, over different iterations of process 300.

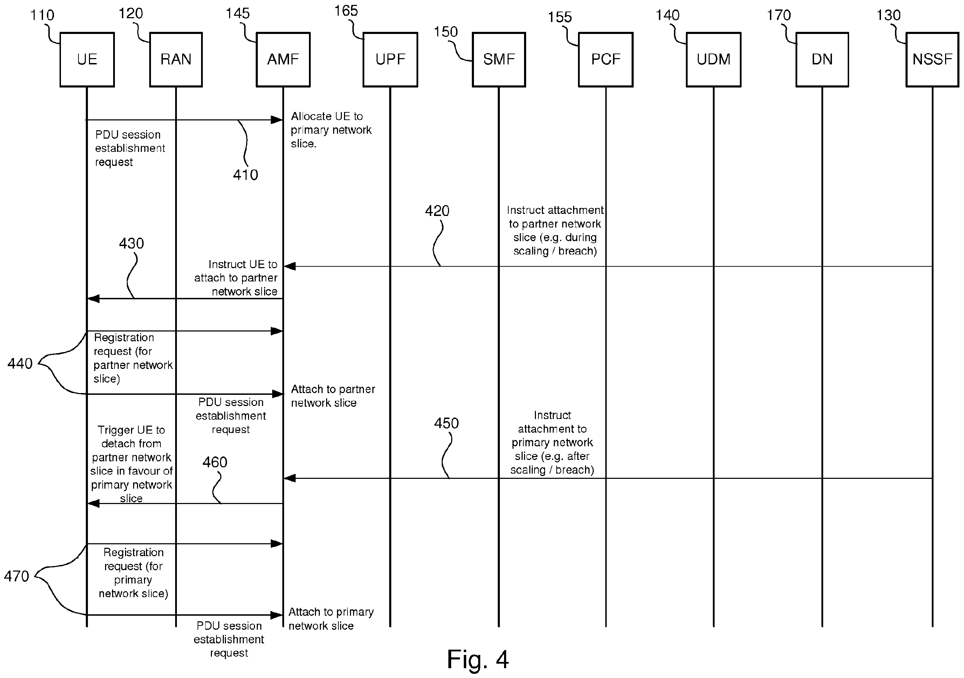

Figure 4 is a diagram illustrating signalling between the UE and the components of the network 100 so as to perform the process 300 as shown in, and as described with reference to, Figure 3.

In a first signalling process 410, the UE 100 sends a network communication to the network 100 via the RAN 120. The AMF 145 receives and processes the network communication in order to establish a connection with the UE; this is performed, for example as outlined in the 3rd Generation Partnership Project (3GPP) Technical Specification 23.502, version 15.2.0, section 4.3.2.2, the contents of which are hereby incorporated by reference.

Once the UE has attached to the network 100, and a Protocol Data Unit (PDU) session has been established, the NSSF identifies the primary network slice. Where it is established (by the AsFn 210-2) that the primary network slice is not suitable for handling network communications from the UE, the NSSF identifies the partner network slice and triggers the AMF to instruct the UE instead to attach to the partner network slice 420. Under these circumstances, the UE is prevented from registering with the primary network slice.

The AMF instructs the UE to attach to the partner network slice 430, and once the UE has done so, the UE registers with the partner network slice 440 to establish a Protocol Data Unit (PDU) session with the partner network slice (again, as per 3GPP Technical Specification 23.502, version 15.2.0, section 4.3.2.2).

After the UE is registered with the partner network slice, the AsFn 210-2 continues to monitor the suitability of the primary network slice. Once the AsFn identifies that the primary network slice is suitable for handling the network communication, the NSSF triggers the AMF to instruct the UE to detach from the partner network slice and then to attach to the primary network slice 450. The AMF proceeds accordingly 460, and the UE attaches to the primary network slice 460 thereby to establish a PDU session (again, as per 3GPP Technical Specification 23.502, version 15.2.0, section 4.3.2.2).

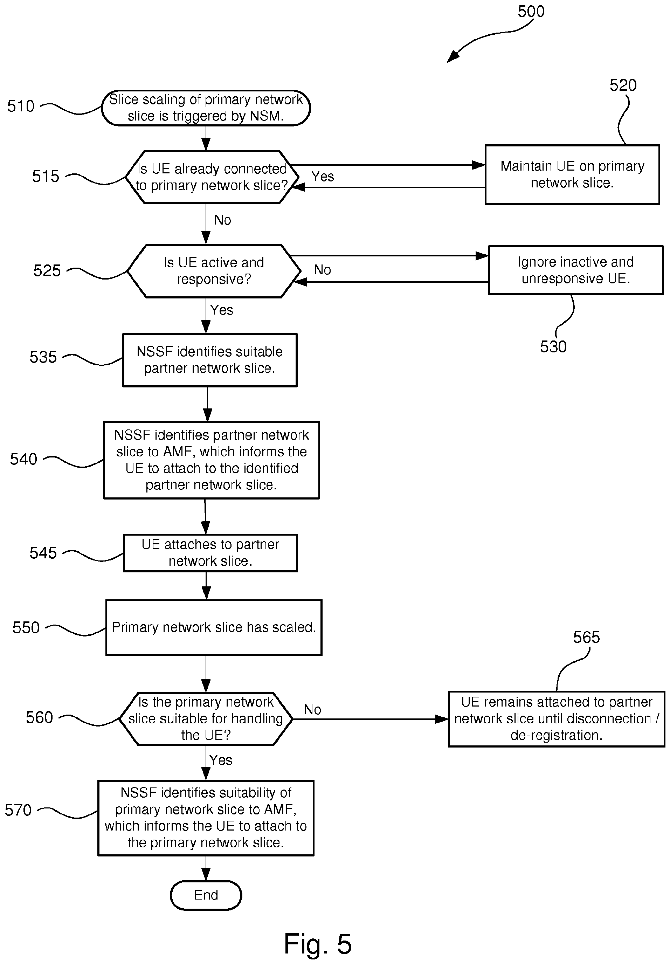

Figure 5 shows, in more detail, a process 500 by which the UE is allocated to the partner network slice when the primary network slice is unsuitable because it is scaling.

In a first step, slice scaling (up, down or out) of the primary network slice is identified (responsively or anticipatorily) 510. The network 100 then queries whether the UE is already connected to the primary network slice 515. If so, the UE is allowed to remain on the primary network slice in order to help reduce disruption to the scaling primary network slice 520. If not, and the UE is a new UE, the network further queries whether the UE is active and responsive 525. If not, for network efficiency, the UE is ignored 530, and query 525 is repeated to identify whether the UE subsequently becomes active (*e.g.* by using a UPF resource).

If the UE is active and responsive, the NSSF identifies a suitable partner network slice for the UE 535, and the AMF instructs the UE to attach to the identified partner network slice 540, thereby registering the UE with the partner network slice 545.

Steps 510 to 545 all occur whilst the primary network slice has been triggered to scale and/or is currently scaling. Once the primary network slice has scaled 550, the network queries whether the primary network slice 560 is suitable for handling the UE (as performed by the AsFn). If not, the UE remains attached to the partner network slice (until the UE is disconnected or de-registers) 565. If so, the NSSF is informed of the availability of the primary network slice and therefore triggers the AMF to register the UE with the primary network slice 570.

When identifying a partner network slice, the NSSF identifies a network slice that is a most appropriate alternative to the primary network slice; that is, a network slice having the same - or a substantially similar - configuration and performance, including in relation to: latency; jitter; bandwidth; availability of processing resources; Quality of Service; Service Level Agreement; type/specialisation of network slice (*e.g*. Ultra-Reliable Low-Latency Communications, Mobile Broadband and enhanced, and Massive Machine Type Communications); and services available on a given network slice (*e.g*. Voice-over-WiFi^{RTM} calling).

In order to maintain a minimum standard of service, rules governing the selection of the partner network slice are utilised, including restrictions that the partner network slice performs no worse than the primary network slice (when it is deemed to be operating as required, for example by the AsFn).

### Alternative and modifications

The network 100 shown in, and described with reference to, Figure 1, is a mobile cellular network. However, it will be appreciated that the aforementioned is available to be implemented as part of any network that utilises network slicing, and more generally as part of any network utilising virtualisation to segregate network resources, including fixed line, local area, and wide area networks. In such examples, the process of managing network resources as described above is performed by functional components of such networks that are analogous to those of the network 100.

In one alternative, the UPF 165 associated with the network slices 220 alerts the NSM 210-1 and/or the AsFn 210-2 when the first network slice is no longer suitable.

In one example, the partner network slice is identified for a specific primary network slice (and therefore applies to all UEs that would register with a given primary network slice). In another example, the partner network slice is identified for a specific UE (that is, on a 'per-UE' basis).

It will be appreciated that reverting the UE to the primary network slice from the partner network slice is optional, and in certain circumstances it may be preferable to retain the UE on the partner network slice, not least to reduce the processing overhead of re-registering the UE.

Each feature disclosed in the description, and (where appropriate) the claims and drawings may be provided independently or in any appropriate combination.

Reference numerals appearing in the claims are by way of illustration only and shall have no limiting effect on the scope of the claims.

## Claims

1. A method (300) of managing allocation of a User Equipment (110), UE, to a network slice (220) of a telecommunications network (100), said UE providing a network communication, the telecommunications network having a plurality of network slices, wherein the UE is allocated to a first network slice (220-1), the method comprising the steps of:
monitoring, by a processor (210), a suitability of the first network slice to process the network communication (320), wherein the first network slice is suitable to process the network communication if an absence of any ongoing and/or future reconfiguration of the first network slice is identified;
identifying, by the processor (210), a second network slice (220-2) that is suitable for processing the network communication (330); and
in response to identifying a lack of suitability of the first network slice to process the network communication, registering, by a controller (130), the UE with the second network slice prior to registering the UE with the first network slice (340).

2. The method according to Claim 1, further comprising a step of preventing the UE (110) from registering with the first network slice (220-1) before registering the UE with the second network slice (220-2).

3. The method according to Claim 1 or 2, wherein the first network slice (220-1) is further suitable to process the network communication if it has, or is to have, sufficient available processing resources to process the network communication.

4. The method according to any preceding claim, wherein the UE (110) is registered with the second network slice (220-2) so as only to utilise functions of said second network slice.

5. The method according to any preceding claim, wherein the first network slice (220-1) is further suitable to process the network communication if the first network slice has, or is to have, a number of concurrent users that is below a threshold.

6. The method according to any preceding claim, wherein the first network slice (220-1) is further suitable to process the network communication if a network performance of the first network slice is, or is to be, beyond a threshold.

7. The method according to any preceding claim, wherein the reconfiguration of the first network slice (220-1) is a: re-starting; scaling; closing; and/or opening of the first network slice.

8. The method according to any preceding claim, wherein identifying the lack of suitability of the first network slice (220-1) to process the network communication triggers reconfiguration of the first network slice.

9. The method according to any preceding claim, further comprising the step of identifying the second network slice (220-2) in response to identifying the lack of suitability of the first network slice (220-1) to process the network communication.

10. The method according to any preceding claim, further comprising the steps of:
continuing to monitor the suitability of the first network slice to process the network communication after the UE has been registered to the second network slice (320); and
in response to identifying that the first network slice is suitable to process the network communication, unregistering the UE from the second network slice and subsequently registering the UE with the first network slice (350).

11. The method according to any preceding claim, wherein the second network slice (220-2) has the same configuration as the first network slice (220-1), when the first network slice is suitable for processing the network communication.

12. The method according to any preceding claim, wherein the network performance of the second network slice (220-2) is no worse than the network performance of the first network slice (220-1), when the first network slice is suitable for processing the network communication.

13. The method according to any preceding claim, wherein the first network slice (220-1) is a network slice that is preferred by the telecommunications network (100) over the second network slice (220-2) for processing the network communication, when the first network slice is suitable for processing the network communication.

14. A telecommunications network (100) for managing allocation of a User Equipment (110), UE, to a network slice, said UE providing a network communication, wherein the telecommunications network comprises:
a first network slice (220-1) and a second network slice (220-2), the UE being allocated to the first network slice for processing the network communication;
a processor (210) for monitoring a suitability of the first network slice to process the network communication and for identifying the second network slice, such that the second network slice is suitable for processing the network communication, and wherein the first network slice is suitable to process the network communication if an absence of any ongoing and/or future reconfiguration of the first network slice is identified; and
a controller (130) for registering the UE with the second network slice prior to registering the UE with the first network slice in response to identifying a lack of suitability of the first network slice to process the network communication.

15. A computer-readable storage medium comprising instructions that, when executed by a processor (210) and a controller (130) associated with a telecommunications network (100), causes the telecommunications network to perform the method (300) according to any of claims 1 to 13.

## Patentansprüche

1. Verfahren (300) zum Managen von Zuteilung eines Benutzergeräts (110), UE, zu einem Netzslice (220) eines Telekommunikationsnetzes (100), wobei das UE eine Netzkommunikation bereitstellt, wobei das Telekommunikationsnetz eine Vielzahl von Netzslices aufweist, wobei das UE einem ersten Netzslice (220-1) zugeteilt wird, wobei das Verfahren die Schritte umfasst von:
Überwachen, durch einen Prozessor (210), einer Eignung des ersten Netzslices zum Verarbeiten der Netzkommunikation (320), wobei der erste Netzslice geeignet ist zum Verarbeiten der Netzkommunikation, wenn eine Abwesenheit von irgendeiner laufenden und/oder zukünftigen Neukonfiguration des ersten Netzslices identifiziert wird;
Identifizieren, durch den Prozessor (210), eines zweiten Netzslices (220-2), der geeignet ist zum Verarbeiten der Netzkommunikation (330); und
als Reaktion auf Identifizieren eines Fehlens von Eignung des ersten Netzslices zum Verarbeiten der Netzkommunikation, Registrieren, durch einen Controller (130), des UE bei dem zweiten Netzslice vor dem Registrieren des UE bei dem ersten Netzslice (340).

2. Verfahren nach Anspruch 1, ferner umfassend einen Schritt des Hinderns des UE (110) am Registrieren bei dem ersten Netzslice (220-1) vor Registrieren des UE mit dem zweiten Netzslice (220-2).

3. Verfahren nach Anspruch 1 oder 2, wobei der erste Netzslice (220-1) ferner geeignet ist zum Verarbeiten der Netzkommunikation, wenn dieser ausreichend verfügbare Verarbeitungsressourcen zum Verarbeiten der Netzkommunikation aufweist oder aufweisen wird.

4. Verfahren nach einem vorhergehenden Anspruch, wobei das UE (110) bei dem zweiten Netzslice (220-2) registriert wird, um somit nur Funktionen des zweiten Netzslices zu nutzen.

5. Verfahren nach einem vorhergehenden Anspruch, wobei der erste Netzslice (220-1) ferner geeignet ist zum Verarbeiten der Netzkommunikation, wenn der erste Netzslice eine Anzahl von gleichzeitigen Benutzern, die unter einer Schwelle liegt, aufweist oder aufweisen wird.

6. Verfahren nach einem vorhergehenden Anspruch, wobei der erste Netzslice (220-1) ferner geeignet ist zum Verarbeiten der Netzkommunikation, wenn eine Netzleistungsfähigkeit des ersten Netzslices jenseits einer Schwelle liegt oder liegen wird.

7. Verfahren nach einem vorhergehenden Anspruch, wobei die Neukonfiguration des ersten Netzslices (220-1) Folgendes ist: ein Neustarten; ein Skalieren; ein Schließen; und/oder ein Öffnen des ersten Netzslices.

8. Verfahren nach einem vorhergehenden Anspruch, wobei Identifizieren des Fehlens von Eignung des ersten Netzslices (220-1) zum Verarbeiten der Netzkommunikation Neukonfiguration des ersten Netzslices auslöst.

9. Verfahren nach einem vorhergehenden Anspruch, ferner umfassend den Schritt des Identifizierens des zweiten Netzslices (220-2) als Reaktion auf Identifizieren des Fehlens von Eignung des ersten Netzslices (220-1) zum Verarbeiten der Netzkommunikation.

10. Verfahren nach einem vorhergehenden Anspruch, ferner den folgenden Schritt umfassend:
Fortsetzen des Überwachens der Eignung des ersten Netzslices zum Verarbeiten der Netzkommunikation, nachdem das UE beim zweiten Netzslice registriert wurde (320); und
als Reaktion auf Identifizieren, dass der erste Netzslice zum Verarbeiten der Netzkommunikation geeignet ist, Deregistrieren des UE von dem zweiten Netzslice und nachfolgendes Registrieren des UE mit dem ersten Netzslice (350).

11. Verfahren nach einem vorhergehenden Anspruch, wobei der zweite Netzslice (220-2) dieselbe Konfiguration wie der erste Netzslice (220-1) aufweist, wenn der erste Netzslice geeignet ist zum Verarbeiten der Netzkommunikation.

12. Verfahren nach einem vorhergehenden Anspruch, wobei die Netzleistungsfähigkeit des zweiten Netzslices (220-2) nicht schlechter als die Netzleistungsfähigkeit des ersten Netzslices (220-1) ist, wenn der erste Netzslice geeignet ist zum Verarbeiten der Netzkommunikation.

13. Verfahren nach einem vorhergehenden Anspruch, wobei der erste Netzslice (220-1) ein Netzslice ist, der von dem Telekommunikationsnetz (100) gegenüber dem zweiten Netzslice (220-2) zum Verarbeiten der Netzkommunikation bevorzugt wird, wenn der erste Netzslice zum Verarbeiten der Netzkommunikation geeignet ist.

14. Telekommunikationsnetz (100) zum Managen der Zuteilung eines Benutzergeräts (110), UE, zu einem Netzslice, wobei das UE eine Netzkommunikation bereitstellt, wobei das Telekommunikationsnetz Folgendes umfasst:
einen ersten Netzslice (220-1) und einen zweiten Netzslice (220-2), wobei das UE dem ersten Netzslice zum Verarbeiten der Netzkommunikation zugeteilt ist;
einen Prozessor (210) zum Überwachen einer Eignung des ersten Netzslices zum Verarbeiten der Netzkommunikation, und zum Identifizieren des zweiten Netzslices, so dass der zweite Netzslice geeignet ist zum Verarbeiten der Netzkommunikation, und
wobei der erste Netzslice geeignet ist zum Verarbeiten der Netzkommunikation, wenn eine Abwesenheit von irgendeiner laufenden und/oder zukünftigen Neukonfiguration des ersten Netzslices identifiziert wird; und
einen Controller (130) zum Registrieren des UE bei dem zweiten Netzslice, bevor das UE bei dem ersten Netzslice registriert wird, als Reaktion auf Identifizieren eines Fehlens von Eignung des ersten Netzslices, die Netzkommunikation zu verarbeiten.

15. Computerlesbares Speicherungsmedium, umfassend Anweisungen, die bei Ausführung durch einen Prozessor (210) und einen Controller (130), assoziiert mit einem Telekommunikationsnetz (100), das Telekommunikationsnetz veranlassen zum Durchführen des Verfahrens (300) nach einem der Ansprüche 1 - 13.

## Revendications

1. Procédé (300) de gestion d'attribution d'un équipement utilisateur (110), UE, à une tranche de réseau (220) d'un réseau de télécommunication (100), ledit UE fournissant une communication de réseau, le réseau de télécommunication ayant une pluralité de tranches de réseau, dans lequel l'UE est attribué à une première tranche de réseau (220-1), le procédé comprenant les étapes de :
la surveillance, par un processeur (210), d'une adéquation de la première tranche de réseau pour traiter la communication de réseau (320), dans lequel la première tranche de réseau est adéquate pour traiter la communication de réseau si une absence de toute reconfiguration continue et/ou future de la première tranche de réseau est identifiée ;
l'identification, par le processeur (210), d'une seconde tranche de réseau (220-2) qui est adéquate pour traiter la communication de réseau (330) ; et
en réponse à l'identification d'un manque d'adéquation de la première tranche de réseau pour traiter la communication de réseau, l'enregistrement, par une unité de commande (130), de l'UE auprès de la seconde tranche de réseau avant l'enregistrement de l'UE auprès de la première tranche de réseau (340).

2. Procédé selon la revendication 1, comprenant en outre une étape de la prévention de l'UE (110) de l'enregistrement auprès de la première tranche de réseau (220-1) avant l'enregistrement de l'UE auprès de la seconde tranche de réseau (220-2).

3. Procédé selon la revendication 1 ou 2, dans lequel la première tranche de réseau (220-1) est en outre adéquate pour traiter la communication de réseau si elle a, ou est prévue d'avoir, des ressources de traitement disponibles suffisantes pour traiter la communication de réseau.

4. Procédé selon une quelconque revendication précédente, dans lequel l'UE (110) est enregistré auprès de la seconde tranche de réseau (220-2) afin de seulement utiliser des fonctions de ladite seconde tranche de réseau.

5. Procédé selon une quelconque revendication précédente, dans lequel la première tranche de réseau (220-1) est en outre adéquate pour traiter la communication de réseau si la première tranche de réseau a, ou est prévue d'avoir, un nombre d'utilisateurs simultanés qui est inférieur à un seuil.

6. Procédé selon une quelconque revendication précédente, dans lequel la première tranche de réseau (220-1) est en outre adéquate pour traiter la communication de réseau si des performances de réseau de la première tranche de réseau sont, ou sont prévues d'être, au-delà d'un seuil.

7. Procédé selon une quelconque revendication précédente, dans lequel la reconfiguration de la première tranche de réseau (220-1) est : un redémarrage ; une mise à échelle ; une fermeture ; et/ou une ouverture de la première tranche de réseau.

8. Procédé selon une quelconque revendication précédente, dans lequel l'identification du manque d'adéquation de la première tranche de réseau (220-1) pour traiter la communication de réseau déclenche une reconfiguration de la première tranche de réseau.

9. Procédé selon une quelconque revendication précédente, comprenant en outre l'étape de l'identification de la seconde tranche de réseau (220-2) en réponse à l'identification du manque d'adéquation de la première tranche de réseau (220-1) pour traiter la communication de réseau.

10. Procédé selon une quelconque revendication précédente, comprenant en outre les étapes de :
le continuation de surveiller l'adéquation de la première tranche de réseau pour traiter la communication de réseau après que l'UE a été enregistré auprès de la seconde tranche de réseau (320) ; et
en réponse à l'identification que la première tranche de réseau est adéquate pour traiter la communication de réseau, le désenregistrement de l'UE auprès de la seconde tranche de réseau et par la suite l'enregistrement de l'UE auprès de la première tranche de réseau (350).

11. Procédé selon une quelconque revendication précédente, dans lequel la seconde tranche de réseau (220-2) a la même configuration que la première tranche de réseau (220-1), lorsque la première tranche de réseau est adéquate pour traiter la communication de réseau.

12. Procédé selon une quelconque revendication précédente, dans lequel les performances de réseau de la seconde tranche de réseau (220-2) ne sont pas pires que les performances de réseau de la première tranche de réseau (220-1), lorsque la première tranche de réseau est adéquate pour traiter la communication de réseau.

13. Procédé selon une quelconque revendication précédente, dans lequel la première tranche de réseau (220-1) est une tranche de réseau qui est préférée par le réseau de télécommunication (100) plutôt que la seconde tranche de réseau (220-2) pour traiter la communication de réseau, lorsque la première tranche de réseau est adéquate pour traiter la communication de réseau.

14. Réseau de télécommunication (100) pour gérer l'attribution d'un équipement utilisateur (110), UE, à une tranche de réseau, ledit UE fournissant une communication de réseau, dans lequel le réseau de télécommunication comprend :
une première tranche de réseau (220-1) et une seconde tranche de réseau (220-2), l'UE étant attribué à la première tranche de réseau pour traiter la communication de réseau ;
un processeur (210) pour la surveiller une adéquation de la première tranche de réseau pour traiter la communication de réseau et pour identifier la seconde tranche de réseau, de telle sorte que la seconde tranche de réseau soit adéquate pour traiter la communication de réseau, et
dans lequel la première tranche de réseau est adéquate pour traiter la communication de réseau si une absence de toute reconfiguration continue et/ou future de la première tranche de réseau est identifiée ; et
une unité de commande (130) pour enregistrer l'UE auprès de la seconde tranche de réseau avant d'enregistrer l'UE auprès de la première tranche de réseau en réponse à l'identification d'un manque d'adéquation de la première tranche de réseau pour traiter la communication de réseau.

15. Support de stockage lisible par ordinateur, comprenant des instructions qui, lorsqu'elles sont exécutées par un processeur (210) et une unité de commande (130) associée à un réseau de télécommunication (100), font en sorte que le réseau de télécommunication réalise le procédé (300) selon l'une quelconque des revendications 1 à 13.
